Europäisches Patentamt

European Patent Office

Office européen des brevets

(19)

(11) **EP 1 341 593 B1**

(12) **FASCICULE DE BREVET EUROPEEN**

(45) Date de publication et mention
de la délivrance du brevet:
**25.05.2005 Bulletin 2005/21**

(51) Int Cl.⁷: **B01D 46/42**, B01D 46/24

(21) Numéro de dépôt: **01270374.0**

(86) Numéro de dépôt international:
**PCT/FR2001/003970**

(22) Date de dépôt: **12.12.2001**

(87) Numéro de publication internationale:
**WO 2002/047794 (20.06.2002 Gazette 2002/25)**

(54) **PROCEDE ET DISPOSITIF DE DECOLMATAGE D'UN FILTRE**

VERFAHREN UND VORRICHTUNG ZUR REINIGUNG EINES FILTERS

METHOD AND DEVICE FOR FILTER BACKWASHING

(84) Etats contractants désignés:
**AT BE CH CY DE DK ES FI FR GB GR IE IT LI LU
MC NL PT SE TR**

(30) Priorité: **15.12.2000 FR 0016423**

(43) Date de publication de la demande:
**10.09.2003 Bulletin 2003/37**

(73) Titulaire: **Société Franco-Belge de Fabrication de
Combustibles - FBFC
92400 Courbevoie (FR)**

(72) Inventeur: **FEUGIER, André
F-26300 Chatuzange le Goubet (FR)**

(74) Mandataire: **Bouget, Lucien et al
Cabinet Lavoix
2, Place d'Estienne d'Orves
75441 Paris Cédex 09 (FR)**

(56) Documents cités:
**EP-A- 0 475 062          EP-A- 0 531 657
FR-A- 2 771 725          US-A- 4 624 689
US-A- 4 666 472          US-A- 4 680 038**

- **DATABASE WPI Section Ch, Week 199845
  Derwent Publications Ltd., London, GB; Class
  J01, AN 1998-524489 XP002174923 & JP 10
  230121 A (RYUKI ENG KK), 2 septembre 1998
  (1998-09-02)**
- **DATABASE WPI Section Ch, Week 198532
  Derwent Publications Ltd., London, GB; Class
  J01, AN 1985-194831 XP002174924 & JP 54
  105374 A (TOYOTA CENT RES & DEV LAB), 18
  août 1979 (1979-08-18)**

EP 1 341 593 B1

## Description

L'invention concerne un procédé et un dispositif de décolmatage d'un filtre d'une installation de fabrication d'oxyde d'uranium à partir d'hexafluorure d'uranium.

On connaît des installations de fabrication d'oxyde d'uranium mettant en oeuvre un procédé de fabrication par voie sèche de l'oxyde d'uranium à partir d'hexafluorure d'uranium $UF_6$ gazeux provenant d'une installation d'enrichissement en isotopes radioactifs de l'uranium utilisé comme combustible nucléaire.

De telles installations mettant en oeuvre le procédé de fabrication d'oxyde d'uranium à partir d'hexafluorure d'uranium, appelé procédé de conversion par voie sèche, comportent, dans une forme de réalisation industrielle qui constitue la forme actuelle la plus satisfaisante et la plus répandue, un réacteur ayant une disposition générale verticale dans lequel on introduit de l'hexafluorure d'uranium $UF_6$, de la vapeur d'eau et de l'azote de dilution, à une température de 200°C à 300°C, et on réalise la conversion de l'hexafluorure d'uranium $UF_6$ en oxyfluorure d'uranium $UO_2F_2$ suivant la réaction d'hydrolyse :

$$UF_6 + 2\,H_2O \rightarrow UO_2F_2 + 4HF.$$

La conversion de l'hexafluorure d'uranium en oxyfluorure d'uranium par hydrolyse produit de l'acide fluorhydrique HF sous forme gazeuse et l'oxyfluorure d'uranium $UO_2F_2$ à l'état pulvérulent.

L'oxyfluorure d'uranium $UO_2F_2$ tombe et se dépose dans le fond du réacteur où il est repris par une vis sans fin assurant son transfert à l'entrée d'un four tournant dans lequel on réalise la conversion de l'oxyfluorure d'uranium $UO_2F_2$ en oxydes d'uranium $UO_{2+x}$, c'est-à-dire en oxyde d'uranium $UO_2$ avec une composition surstoechiométrique, le rapport O/U de l'oxyde variant entre 2,03 et 2,66, suivant les conditions de réalisation de la conversion dans le four tournant.

De l'acide fluorhydrique HF est évacué par la partie supérieure du réacteur de conversion de l'hexafluorure d'uranium, à travers des unités de filtration qui assurent une retenue de la poudre d'oxyfluorure d'uranium $UO_2F_2$ entraînée par l'acide fluorhydrique gazeux en mélange avec des gaz tels que $N_2$ et $H_2O$ aspirés à la partie supérieure du réacteur de conversion.

On utilise généralement au moins deux unités ou blocs de filtration disposées à la partie supérieure du réacteur par laquelle sont évacués les gaz contenant de l'acide fluorhydrique.

Chacune des unités de filtration comporte un collecteur, ou culasse d'évacuation des gaz, communiquant par une conduite, à l'extérieur du réacteur de conversion, avec une installation permettant l'aiguillage des gaz vers un filtre de secours situé à l'extérieur du réacteur en aval de l'installation d'aiguillage des gaz, disposée dans une boîte chaude, et vers une unité de récupération de l'acide fluorhydrique.

Les unités de filtration comportent, à l'intérieur du réacteur de conversion, un ensemble de filtres, ou cartouches filtrantes, comportant chacun une paroi filtrante de forme globalement cylindrique disposée dans la partie supérieure du réacteur de conversion avec son axe vertical.

Les filtres, ou cartouches filtrantes de chacune des unités de filtration, reposent et sont fixés, par l'intermédiaire d'une bride supérieure, sur une platine de l'unité de filtration disposée horizontalement et assurant la séparation entre le collecteur ou culasse de l'unité de filtration et le volume intérieur du réacteur dans lequel se déroule la réaction chimique de formation de l'oxyfluorure d'uranium.

Les gaz, plus ou moins chargés en oxyfluorure d'uranium pulvérulent, viennent au contact de la surface extérieure des cartouches filtrantes et après séparation de l'oxyfluorure d'uranium pulvérulent, traversent la paroi de la cartouche filtrante pour parvenir dans la culasse de l'unité de filtration. L'oxyfluorure d'uranium pulvérulent arrêté par la paroi extérieure de l'unité de filtration peut retomber par gravité dans le fond du réacteur où il est repris par la vis sans fin de transfert du pulvérulent.

Les parois de filtration de forme tubulaire des cartouches filtrantes qui sont généralement constituées par des particules ou fibres comprimées et frittées présentent des pores de passage des gaz contenant de l'acide fluorhydrique dont la taille est inférieure à la taille des particules d'oxyfluorure d'uranium, de manière à arrêter toutes les particules solides qui peuvent être transportées par les gaz.

Une partie des particules d'oxyfluorure d'uranium à l'état pulvérulent se dépose sur la surface externe de la paroi tubulaire de la cartouche, de sorte que les filtres se colmatent progressivement pendant le fonctionnement de l'installation. Le passage de l'acide fluorhydrique et des gaz en mélange à travers la paroi des filtres se produit avec une perte de charge accrue incompatible avec un fonctionnement continu de l'installation.

Il est donc nécessaire de réaliser périodiquement et avec une fréquence suffisante le décolmatage des parois des cartouches filtrantes.

Ce décolmatage est réalisé en injectant, à l'intérieur des cartouches filtrantes, à contre-courant par rapport au sens de circulation des gaz contenant de l'acide fluorhydrique, un gaz neutre de décolmatage tel que l'azote.

L'azote de décolmatage doit être envoyé dans les cartouches filtrantes avec une surpression de l'ordre de 2,5 bar et à une température de l'ordre de 130°C, la température dans le réacteur de conversion étant de l'ordre de 300°C et la température des gaz à la sortie du réacteur, de l'ordre de 200°C à 300°C.

L'azote de décolmatage qui est contenu dans un ballon de stockage est envoyé aux unités de filtration, par l'intermédiaire de l'installation d'aiguillage des gaz située au-dessus du réacteur de conversion. Cette installation d'aiguillage des gaz est disposée à l'intérieur d'un caisson chauffant dont la température intérieure est de l'ordre de 150°C.

A l'intérieur du caisson chauffant sont disposées des vannes, en particulier des vannes trois-voies permettant d'une part de faire passer les gaz contenant de l'acide fluorhydrique vers le filtre de secours et l'installation de récupération, pendant les phases de fonctionnement normal de l'unité de filtration et d'autre part de faire passer l'azote de décolmatage dans le sens inverse de la circulation des gaz, pendant les phases de décolmatage.

Les vannes supportent des températures élevées et, du fait qu'elles fonctionnent à leur limite supérieure de température, leur utilisation et leur maintenance sont complexes et coûteuses.

De manière à assurer un fonctionnement continu de l'installation, on effectue le décolmatage sur l'une des unités de filtration pendant que la seconde unité de filtration assure à elle seule l'évacuation des gaz contenant de l'acide fluorhydrique produit dans le réacteur. De ce fait, pendant les phases de décolmatage, l'unité de filtration qui reste en fonctionnement doit évacuer un débit de gaz sensiblement double de son débit de fonctionnement habituel. De plus, le débit d'azote de décolmatage qui est envoyé dans la seconde unité de filtration, vers l'intérieur du réacteur de conversion, doit être évacué, ce qui augmente encore le débit de gaz qui doit être évacué par l'unité de filtration restée en fonctionnement.

Dans une forme de réalisation connue des unités de filtration d'un réacteur de conversion d'hexafluorure d'uranium, chacune des unités de filtration comporte huit cartouches filtrantes qui sont réparties dans le plan de la platine horizontale de support des filtres séparant la culasse de récupération d'acide fluorhydrique du volume intérieur du réacteur.

L'injection d'azote de décolmatage dans la culasse est réalisée par la conduite d'évacuation des gaz contenant de l'acide fluorhydrique, dans une zone située à la partie centrale de la culasse, c'est-à-dire à l'aplomb de la partie centrale de la platine de support des filtres. Il en résulte que le jet d'azote de décolmatage qui est dirigé vers la partie centrale de la platine et vers les filtres portés par cette partie centrale réalise un décolmatage préférentiel des filtres situés à la partie centrale. Ces filtres sont parfaitement décolmatés alors que les filtres situés vers la périphérie de la platine de support de l'unité de filtration ne sont pas décolmatés de manière suffisante. Ces filtres s'encrassent, si bien que la pression augmente et que le fonctionnement de l'installation de conversion est perturbé, les gaz passant de manière préférentielle dans les filtres situés à la partie centrale qui sont décolmatés de manière efficace.

Le but de l'invention est donc de proposer un procédé de décolmatage d'au moins un filtre d'une installation de fabrication d'oxyde d'uranium à partir d'hexafluorure d'uranium, comportant un réacteur dans lequel on injecte de l'hexafluorure d'uranium $UF_6$ gazeux et de la vapeur d'eau, on forme de l'oxyfluorure d'uranium $UO_2F_2$ à l'état pulvérulent et de l'acide fluorhydrique gazeux HF, on sépare l'oxyfluorure d'uranium $UO_2F_2$ entraîné par des gaz contenant de l'acide fluorhydrique gazeux HF à la sortie du réacteur, dans au moins une unité de filtration disposée sur une partie de sortie du réacteur, comportant au moins un filtre ayant une paroi de filtration de forme tubulaire, disposée avec son axe vertical et on évacue l'acide fluorhydrique à l'extérieur du réacteur, le décolmatage du filtre consistant à séparer, de la paroi du filtre, des particules d'oxyfluorure d'uranium déposées, par un courant de gaz neutre tel que l'azote injecté dans le filtre, dans un sens à contre-courant de la circulation de l'acide fluorhydrique, ce procédé permettant de réaliser un décolmatage efficace, en gardant en fonctionnement l'unité de filtration sur laquelle est disposé le filtre dont on réalise le décolmatage, avec des moyens d'aiguillage simples des gaz et une quantité réduite de gaz neutre de décolmatage.

Dans ce but, on injecte le gaz neutre suivant l'axe de la paroi du filtre sous forme d'un jet à une vitesse supérieure à 300 m/s, pendant une durée inférieure à une seconde.

Afin de bien faire comprendre l'invention, on va décrire, à titre d'exemple, en se référant aux figures jointes en annexe, une installation de fabrication d'oxyde d'uranium par le procédé de conversion par voie sèche, et un dispositif de décolmatage permettant de mettre en oeuvre le procédé de l'invention, de manière comparative à un dispositif permettant de mettre en oeuvre le procédé de décolmatage selon l'art antérieur.

La figure 1 est une vue d'ensemble en élévation et en coupe verticale d'une installation de fabrication d'oxyde d'uranium par le procédé de conversion par voie sèche.

La figure 2 est une vue en coupe verticale partielle d'une unité de filtration du réacteur de conversion de l'hexafluorure d'uranium en oxyfluorure d'uranium.

La figure 3 est une vue de dessus suivant 3-3 de la figure 2, de la platine de support des cartouches filtrantes de l'unité de filtration.

La figure 4 est un schéma de principe montrant les moyens d'aiguillage et de circulation de gaz, permettant l'entrée et la sortie de gaz dans la partie supérieure du réacteur de conversion, dans le cas d'un réacteur comportant un dispositif de décolmatage suivant l'art antérieur.

La figure 5 est une vue en coupe verticale d'une unité de filtration d'un réacteur de conversion d'hexafluorure d'uranium comportant un dispositif de décolmatage selon l'invention.

La figure 6 est une vue de détail d'une partie de la figure 5 montrant le dispositif de décolmatage pour la mise en oeuvre du procédé suivant l'invention.

Les figures 7, 8 et 9 sont des vues en plan de trois modes de réalisation différents du dispositif de décolmatage suivant l'invention.

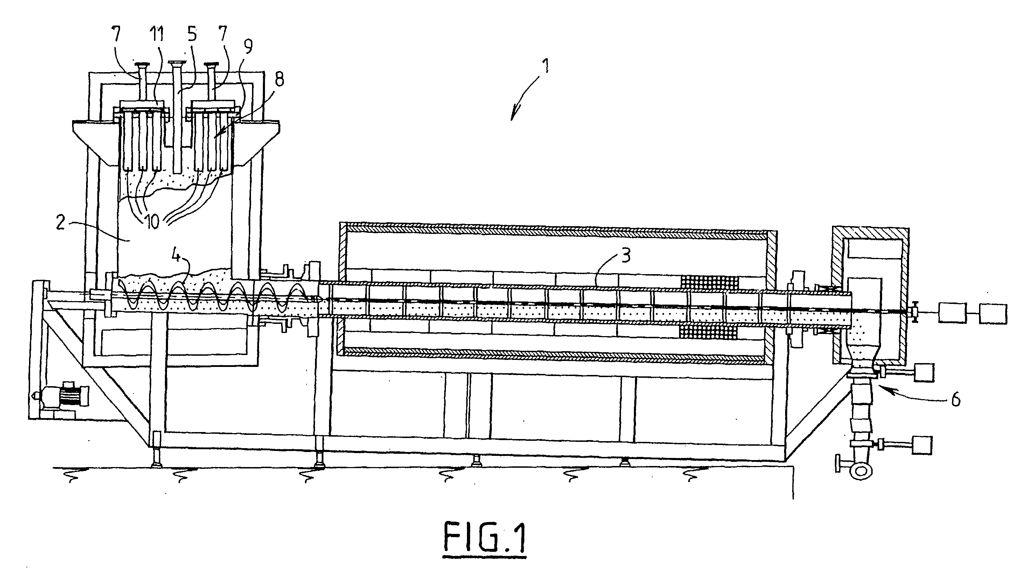

Sur la figure 1, on voit une installation de fabrication d'oxyde d'uranium désignée de manière générale par le repère 1 et comportant un réacteur 2 de conversion d'hexafluorure d'uranium en oxyfluorure d'uranium et un four tournant 3 de conversion d'oxyfluorure d'uranium en oxyde d'uranium.

Le réacteur 2 est constitué par une enceinte placée de manière générale dans une disposition verticale, dans laquelle débouche une conduite 5 d'injection des gaz réactifs $UF_6$ et $H_2O$ et d'un gaz de dilution qui peut être un gaz neutre tel que l'azote, à l'intérieur de l'enceinte du réacteur 2.

Dans le réacteur 2, on effectue l'hydrolyse de l'hexafluorure d'uranium $UF_6$ par de la vapeur d'eau, de manière à former de l'oxyfluorure d'uranium pulvérulent qui tombe dans le fond du réacteur 2 et qui est repris par une vis de transport 4 qui assure le transfert de l'oxyfluorure d'uranium à l'état solide pulvérulent formé dans le réacteur 2, à l'entrée du four tournant 3 dans lequel l'oxyfluorure d'uranium est transformé en oxyde d'uranium (principalement $UO_2$).

La réaction d'hydrolyse de l'hexafluorure d'uranium produit de l'acide fluorhydrique gazeux HF à l'intérieur du réacteur 2, l'acide fluorhydrique gazeux étant évacué à l'extérieur du réacteur 2 de conversion de l'hexafluorure d'uranium, par deux conduites de récupération verticales 7 reliées chacune à une unité de filtration 8 du réacteur 2. Dans le mode de réalisation particulier décrit, chacune des unités de filtration 8 comporte huit cartouches filtrantes telles que 10 comportant une paroi filtrante tubulaire disposée avec son axe vertical à l'intérieur du réacteur 2, dans la partie de sortie du réacteur.

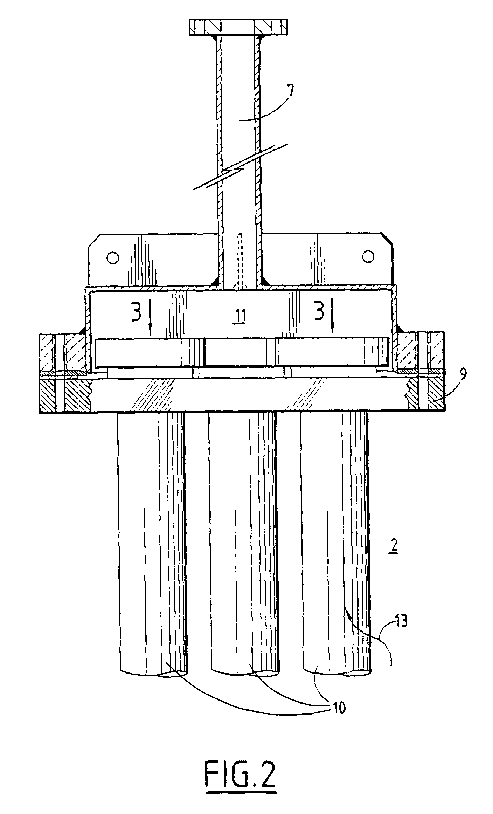

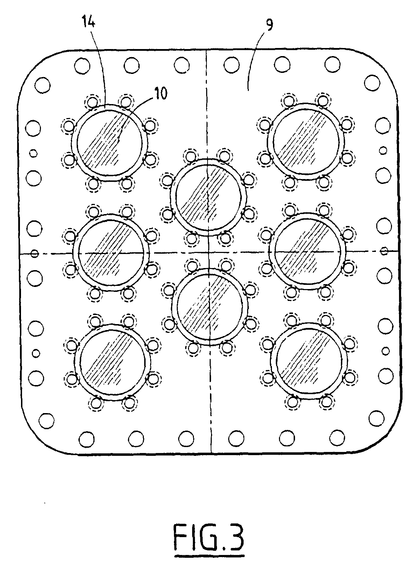

Comme il est visible en particulier sur les figures 2 et 3, les cartouches filtrantes 10 de chacune des unités de filtration 8 sont fixées sur une platine 9 horizontale de l'unité de filtration qui est traversée par des ouvertures de passage des cartouches filtrantes 10 et qui sépare un collecteur ou culasse 11 de l'unité de filtration dans lequel débouche la conduite de récupération 7, du volume intérieur du réacteur 2. Chacune des cartouches filtrantes 10 ou filtre de l'unité de filtration 8 est fixée de manière étanche sur la surface supérieure de la platine 9, par l'intermédiaire d'une bride de fixation. Chacune des cartouches de filtration 10 est fermée à son extrémité disposée à l'intérieur du réacteur 2 et ouverte à son extrémité opposée débouchant dans la culasse 11 de l'unité de filtration.

De cette manière, le flux gazeux doit traverser la paroi filtrante des cartouches de filtration 10 pour passer de l'enceinte du réacteur 2 à la culasse 11 communiquant avec la conduite 7 de récupération des gaz.

Comme il est visible sur la figure 2, le courant gazeux 13 qui traverse la paroi de filtration 12 de la cartouche filtrante est séparé de la poudre d'oxyfluorure d'uranium qui ne peut traverser les pores de la paroi 12.

Une partie de la poudre d'oxyfluorure d'uranium se dépose cependant sur la paroi 12 de la cartouche filtrante 10, de telle sorte que la cartouche filtrante se colmate progressivement pendant le fonctionnement du réacteur.

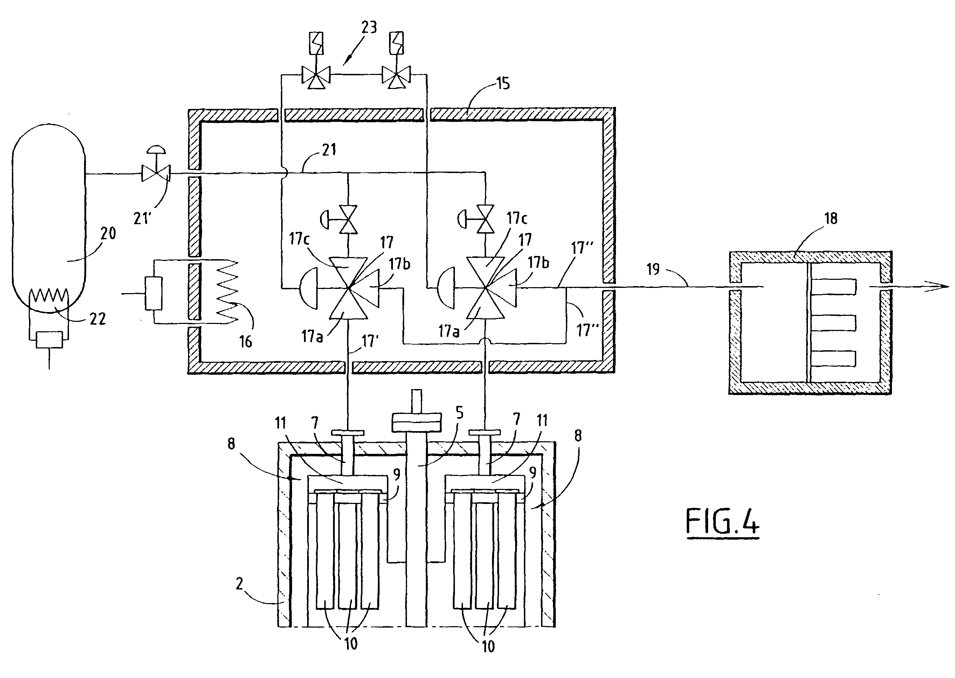

Sur la figure 4, on a représenté de manière schématique, dans le cas d'une installation suivant l'art antérieur, d'une part, les moyens d'alimentation du réacteur 2 en gaz réactif et en gaz de dilution ainsi que les moyens d'évacuation des gaz formés ou présents dans le réacteur 2 et, d'autre part, les moyens permettant de décolmater les cartouches filtrantes 10 des unités de filtration 8 du réacteur 2.

Le réacteur 2 comporte deux unités de filtration 8, chacune des unités comportant elle-même huit cartouches de filtration réparties suivant la section transversale de l'unité de filtration, comme il est visible sur la figure 3 montrant la répartition des parties de support et de fixation des cartouches filtrantes sur la platine de fixation 9 des cartouches filtrantes d'une unité de filtration 8. La platine 9, de forme sensiblement carrée, comporte huit ouvertures de passage d'une cartouche filtrante autour de chacune desquelles une cartouche filtrante vient reposer par l'intermédiaire d'une bride 14 fixée à son extrémité supérieure. Les huit ouvertures de passage des huit cartouches filtrantes sont disposées sur la platine 9, suivant une rangée centrale comportant deux cartouches dont les axes sont disposés dans un plan médian de la platine 9 et deux rangées externes disposées de part et d'autre de la rangée centrale comportant trois cartouches dont les axes sont placés dans deux plans parallèles au plan médian renfermant les axes de la rangée centrale. La platine 9 assure la fermeture de la culasse 11 de l'unité de filtration, à sa partie inférieure, et la conduite de récupération des gaz 7 est disposée suivant l'axe vertical de l'unité de filtration et débouche ainsi à l'aplomb de la partie centrale de la platine 9, entre les parties débouchantes des deux cartouches filtrantes disposées dans la rangée centrale.

Sur la figure 4, on a représenté la partie supérieure du réacteur 9 de conversion de l'hexafluorure en oxyfluorure d'uranium ainsi que des moyens d'évacuation des gaz et des moyens de décolmatage des filtres des unités de filtration, réalisés suivant l'art antérieur.

Dans la partie supérieure du réacteur 2, sont disposées deux unités de filtration 8 placées en parallèle et comportant chacune une conduite 7 d'évacuation de gaz contenant de l'acide fluorhydrique à l'extérieur du réacteur 2. Au-dessus du réacteur 2 est disposé un caisson chauffant 15 comportant une paroi isolante et une résistance de chauffage 16 permettant de maintenir la température à l'intérieur du caisson aux environs de 150°C.

A l'intérieur du caisson 15, sont disposées deux vannes trois-voies 17 qui sont reliées chacune par une première voie 17a et une conduite 17' à la conduite d'évacuation 7 d'une unité de filtration 8, débouchant dans la culasse 11 de l'unité de filtration et par une seconde voie 17b et une conduite 17", à une canalisation 19 d'évacuation des gaz vers le filtre auxiliaire 18.

La troisième voie 17c des vannes trois-voies 17 est reliée par l'intermédiaire d'une conduite 21 sur laquelle est placée une vanne d'isolement 21' à un ballon 20 contenant de l'azote sous pression qui peut être utilisé pour réaliser le décolmatage des filtres 10 des unités de filtration 8 par le procédé selon l'art antérieur qui sera décrit brièvement ci-après.

Le ballon 20 renferme de l'azote à une pression de 2,5 bars chauffé à 130°C par une résistance de chauffage 22.

Pendant le fonctionnement normal du réacteur de conversion 2, on introduit par la conduite 5, à l'intérieur du réacteur 2, de l'hexafluorure d'uranium $UF_6$, de la vapeur d'eau et de l'azote de dilution.

On forme, à l'intérieur du réacteur 2, de l'oxyfluorure d'uranium $UO_2F_2$ et de l'acide fluorhydrique HF qui est évacué par les conduites 7 à la sortie des deux unités de filtration 8 qui sont reliées aux vannes trois-voies 17 commandées par le circuit de commande 23. Les vannes 17 sont alors commandées de manière que le gaz acide passe par la première et la seconde voies des vannes trois-voies pour être envoyé dans le filtre auxiliaire 18 puis récupéré.

Le procédé de décolmatage suivant l'art antérieur qui peut être mis en oeuvre en utilisant l'installation représentée sur la figure 4 est un procédé dit "off line", c'est-à-dire un procédé dans lequel on place hors circuit l'unité de filtration sur laquelle on réalise le décolmatage. Pour cela, on commande la vanne trois-voies 17 de l'unité de filtration sur laquelle on réalise le décolmatage pour mettre en communication la troisième et la première voies de la vanne trois voies 17. De ce fait, les gaz produits dans le réacteur 2 ne peuvent plus être évacués par l'unité de filtration 8 sur laquelle on réalise le décolmatage et la conduite d'évacuation 7 correspondante.

Le décolmatage est réalisé en ouvrant la vanne d'isolement 21' de la ligne d'alimentation en azote, de manière à envoyer un jet d'azote de décolmatage sous pression à une température de 130°C, dans la conduite de liaison 17' et dans la conduite d'évacuation 7 de l'unité de filtration 8 sur laquelle on réalise le décolmatage.

L'azote de décolmatage est injecté dans la culasse 11 de l'unité de filtration, à l'aplomb des cartouches filtrantes 10 situées à la partie centrale de la platine 9 de l'unité de filtration. De ce fait, les deux cartouches filtrantes centrales de l'unité de filtration peuvent être décolmatées de manière efficace, alors que les six cartouches les plus éloignées ne sont décolmatées que de manière partielle.

En outre, pour réaliser le décolmatage d'une unité de filtration, il est nécessaire d'injecter un volume d'azote de décolmatage dans l'unité de filtration qui est relativement élevé et généralement de l'ordre de 50 litres (à la pression atmosphérique), pendant le décolmatage qui est effectué en ouvrant la vanne d'isolement du ballon d'azote pendant une durée de l'ordre de 0,5 seconde.

De ce fait, la seconde unité de filtration restée en fonctionnement pendant le décolmatage doit évacuer non seulement l'ensemble des gaz produits dans le réacteur 2 mais encore le flux supplémentaire d'azote de décolmatage injecté dans la première unité, ce qui occasionne une surpression générale dans le réacteur.

Le procédé connu de l'art antérieur a donc une efficacité réduite en ce qui concerne le décolmatage des filtres éloignés de la partie centrale de l'unité de filtration.

En outre, la réalisation "off line" du décolmatage sur une unité de filtration nécessite un fonctionnement anormal de la seconde unité de filtration et du circuit correspondant d'évacuation des gaz contenant de l'acide fluorhydrique.

Selon l'invention, on propose un nouveau procédé de décolmatage qui permet de maintenir en fonctionnement pendant le décolmatage l'unité de filtration sur laquelle on réalise le décolmatage.

Un tel procédé est appelé procédé "on line".

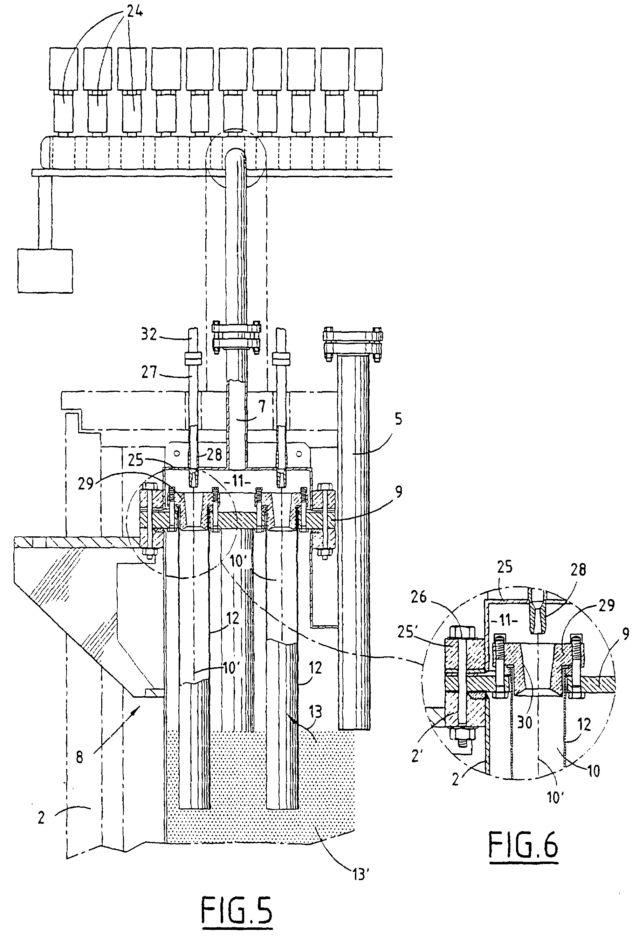

Sur les figures 5 et 6, on a représenté une unité de filtration d'un réacteur de conversion d'hexafluorure d'uranium en oxyfluorure d'uranium équipée d'un dispositif de décolmatage permettant de mettre en oeuvre le procédé selon l'invention.

Les éléments correspondants de l'installation représentée sur les figures 5 et 6 d'une part et sur les figures 1 à 4 d'autre part sont désignés par les mêmes repères.

Les unités de filtration 8 de l'installation représentée sur les figures 5 et 6 sont réalisées de la même manière que les unités de filtration décrites en regard des figures 2 et 3. Ces unités de filtration comportent chacune huit filtres ou cartouches filtrantes 10 supportées par une platine 9 traversée par des ouvertures de passage des cartouches filtrantes, la platine 9 séparant la culasse ou collecteur 11 de l'unité de filtration dans laquelle débouche la conduite de récupération des gaz de l'espace intérieur du réacteur 2 dans lequel sont introduites les cartouches filtrantes 10.

Pendant le fonctionnement normal du réacteur de conversion 2, de l'acide fluorhydrique gazeux et d'autres gaz (vapeur d'eau, hydrogène, ...) traversent la paroi poreuse 12 des cartouches filtrantes 10, dans l'espace intérieur du réacteur, comme représenté par la flèche 13 et des particules 13' d'oxyfluorure d'uranium à l'état pulvérulent retombent dans le fond du réacteur 2. Il se produit cependant un colmatage progressif de la paroi 12 des cartouches filtrantes, qui nécessite un décolmatage périodique des cartouches.

Selon l'invention, on réalise le décolmatage par un ou plusieurs jets successifs très brefs d'azote de décolmatage envoyés suivant l'axe de chacune des cartouches filtrantes 10, à une vitesse sonique. L'injection d'azote de décolmatage est réalisée en maintenant l'unité de filtration sur laquelle on réalise le décolmatage en fonctionnement, c'est-à-dire en maintenant le passage de l'acide fluorhydrique et des gaz en mélange à travers l'unité de filtration pour leur évacuation par la conduite 7 reliée à la culasse 11 de l'unité de filtration.

La culasse 11 d'une unité de filtration 8 comporte une paroi de culasse 25 qui est fixée, dans une disposition parallèle, au-dessus de la platine 9 séparant la culasse 11 du volume intérieur du réacteur 2, par l'intermédiaire d'une bride 25' reposant sur la platine 9. Des ensembles à vis et écrou 26 permettent de fixer et de serrer l'une contre l'autre la bride 25' de la paroi 25 de la culasse, une partie périphérique de la platine 9 de support des filtres 10 et une bride 2' solidaire de la partie supérieure de la paroi du réacteur 2. Des joints d'étanchéité sont intercalés entre les brides serrées l'une contre l'autre de part et d'autre de la platine 9. La paroi 25 de la platine 11 porte un ensemble de huit buses 28 d'injection d'azote de décolmatage, chacune suivant l'axe 10' d'une cartouche filtrante 10. Chacune des buses 28 peut être reliée par une conduite 27 à une électrovanne d'un ensemble d'électrovannes 24 de distribution d'azote de décolmatage fixées sur un support au-dessus des unités de filtration 8.

Chacune des buses 28 d'injection d'azote de décolmatage est associée à une cartouche filtrante 10 et placée de manière que l'axe de la buse 28 soit dirigé suivant l'axe 10' de la cartouche filtrante, l'extrémité d'injection de la buse 28 se trouvant légèrement au-dessus de la surface supérieure d'une bride 29 de support et de fixation de la cartouche filtrante 10 sur la surface supérieure de la platine 9 de la culasse 11.

Le conduit de la buse 28 peut être cylindrique ou de forme convergente-divergente ; la buse peut être placée dans le collecteur 11, immédiatement en amont et dans une disposition coaxiale par rapport à une ouverture 30 traversant la bride 29 de support de la cartouche filtrante 10 constituant un venturi, c'est-à-dire un conduit convergent-divergent assurant une accélération supplémentaire d'un jet d'azote de décolmatage envoyé sous pression dans la buse 28 pendant une durée très courte. On réalise ainsi le décolmatage par un jet impulsionnel à vitesse sonique, c'est-à-dire à une vitesse sensiblement égale ou légèrement supérieure à la vitesse du son.

Dans une variante de réalisation, la buse peut être introduite à l'intérieur de la cartouche filtrante et disposée dans une zone médiane à milongueur de la cartouche filtrante. On assure ainsi la pénétration du jet de gaz de nettoyage dans la cartouche du filtre.

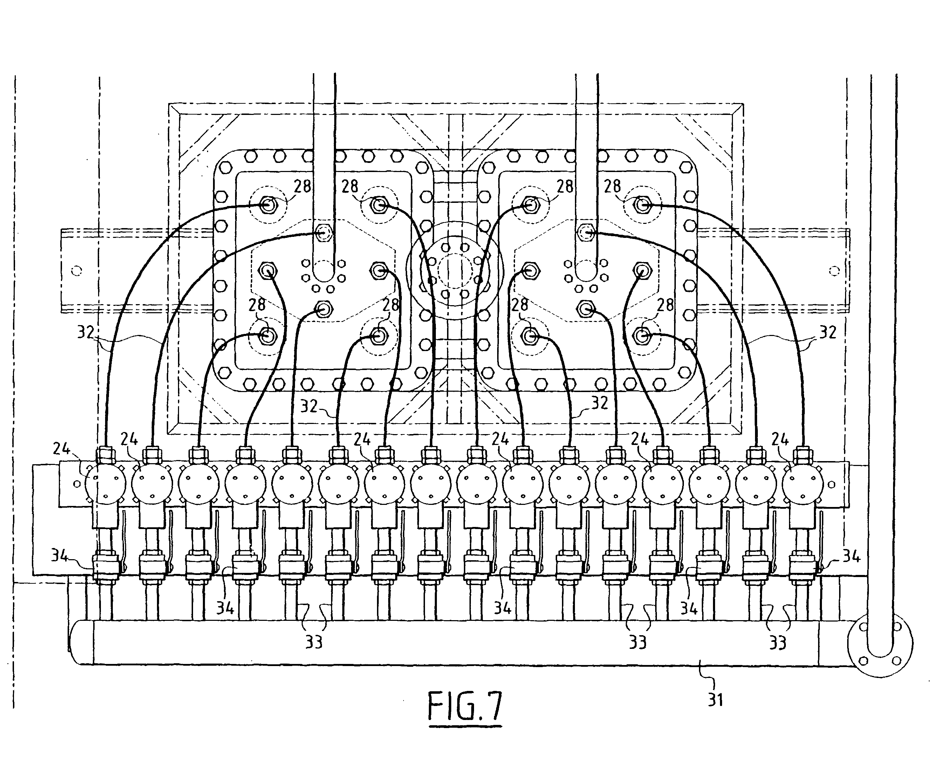

On décrira divers modes d'alimentation des buses 28 de décolmatage des unités de filtration en regard des figures 7, 8 et 9.

Les différentes variantes du système d'alimentation des buses de décolmatage permettent d'alimenter les buses de décolmatage de manière groupée ou de manière individuelle. Les buses de décolmatage, qui sont des buses individuelles pour chacune des cartouches filtrantes peuvent donc être alimentées de manière simultanée ou successive suivant le système d'alimentation choisi.

Des conditions types de réalisation et de fonctionnement d'un moyen de décolmatage d'une cartouche filtrante constitué par une buse 28 et un venturi 30 seront données ci-après.

Dans le cas d'une buse ayant un conduit de forme convergente-divergente, le diamètre du col de la buse peut être de l'ordre de 10 mm. L'angle d'ouverture du divergent peut être compris entre 5 et 15° et par exemple de l'ordre de 10°.

La fréquence de décolmatage est ajustée suivant l'augmentation de perte de charge du réacteur et la durée d'ouverture de la vanne de décolmatage 24 reliée à la buse 28 par le conduit 27 peut être de 0,1 seconde à 0,5 seconde, par exemple 0,14 seconde ou encore 0,2 seconde.

La surpression de l'azote de décolmatage dans le ballon de stockage d'azote est de 2 à 10 bars, et de préférence d'environ 6 bars.

Pour une pression d'azote de 6 bars et une buse ayant un orifice d'environ 10 mm, le volume d'azote injecté à chacun des décolmatages est de 10 litres, pendant une durée de 0,14 seconde, et de 15 litres pendant une durée de 0,2 seconde. Il est à remarquer que les volumes d'azote de décolmatage injectés lors de chacune des opérations de décolmatage par jet pulsé sont sensiblement inférieurs au volume injecté lors d'une opération de décolmatage selon l'art antérieur.

La buse est réalisée de telle sorte que la vitesse du jet de gaz injecté à la sortie du venturi 30 soit supérieure à 330 m/s, ce qui situe le jet dans la zone des vitesses soniques.

Suivant le type de filtre utilisé et le mode de fonctionnement de l'installation de conversion, les paramètres caractéristiques du jet pulsé, à savoir sa vitesse et sa durée, pourront être différents des valeurs données ci-dessus.

Dans tous les cas cependant, la vitesse du jet de décolmatage à l'entrée de la cartouche de filtration sera supérieure à 300 m/s et la durée de l'injection du jet à vitesse sonique sera inférieure à 1 seconde.

Comme il a été indiqué plus haut, l'alimentation des buses et donc la conduite du décolmatage peuvent être réalisées de différentes manières qui seront décrites en regard des figures 7, 8 et 9.

Sur les figures 7, 8 et 9, les éléments correspondants portent les mêmes repères et les éléments correspondants représentés sur les figures 7, 8 et 9 d'une part et sur la figure 4 d'autre part sont également désignés par les mêmes repères.

Dans tous les cas, dans le cadre du procédé selon l'invention, on utilise une installation comportant des moyens d'évacuation d'acide fluorhydrique en mélange avec de la vapeur d'eau, de l'hydrogène et de l'azote de dilution et des moyens de distribution d'azote de décolmatage qui sont plus simples que ceux qui ont été décrits dans le cas de l'art antérieur, en regard de la figure 4.

Sur la figure 7, on a représenté un ensemble de moyens de distribution d'azote de décolmatage dans les buses 28 d'une installation de décolmatage selon l'invention telle que décrite plus haut en regard des figures 5 et 6.

Les moyens de distribution d'azote représentés sur la figure 7 sont réalisés de manière que l'azote puisse être envoyée successivement dans chacune des buses 28 pour le décolmatage successif de chacune des cartouches filtrantes 10 de chacune des unités de filtration de l'installation.

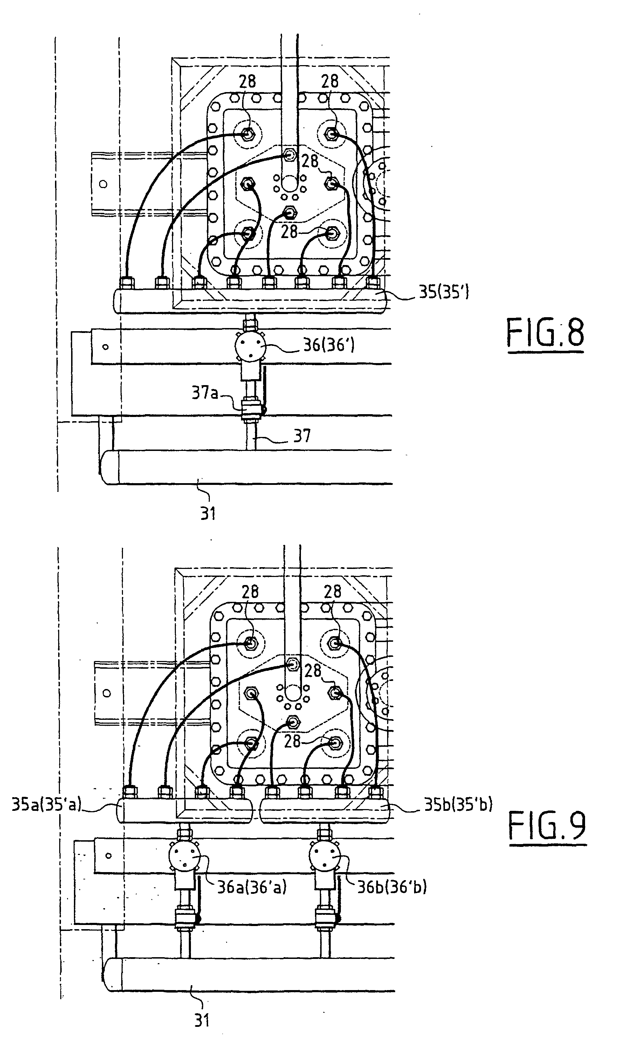

Deux variantes des moyens de distribution d'azote permettant d'assurer l'alimentation simultanée de l'ensemble des buses 28 de décolmatage des filtres d'une unité de filtration ou des buses de décolmatage d'une partie seulement des filtres d'une unité de filtration (par exemple la moitié des filtres) seront décrites en regard des figures 8 et 9, respectivement.

Comme il et visible sur la figure 7, les moyens de distribution d'azote dans les buses 28 comportent une réserve d'azote 31 constituée par un conduit calorifugé de grand diamètre.

La réserve d'azote 31 d'une capacité de 20 à 30 litres contient de l'azote sous une pression qui peut être comprise entre 2 et 10 bars et qui est par exemple de 6 bars et à une température de l'ordre de 130°C. Sur un côté de la conduite constituant la réserve 31, sont disposées des électrovannes 24 assurant la distribution d'azote dans chacune des conduites 27 d'alimentation d'une buse 28, par l'intermédiaire d'un flexible 32.

Dans le cas du mode de réalisation représenté sur la figure 7, on utilise seize électrovannes 24 associées chacune à l'une des seize buses de décolmatage des filtres des deux unités de filtration. Chacune des électrovannes 24 est reliée à la réserve d'azote 31, par une conduite 33 sur laquelle est disposée une vanne d'arrêt manuelle 34 permettant éventuellement d'isoler une ou plusieurs vannes de la réserve d'azote.

Les électrovannes 24 peuvent être commandées en séquence, de manière automatique, pour alimenter en azote de décolmatage chacune des buses 28 successivement, pendant une durée déterminée comprise par exemple entre 0,1 et 0,5 seconde.

Dans le cas du mode de réalisation des moyens de distribution représenté sur la figure 8, une seule électrovanne 36 (ou 36'), reliée à la réserve d'azote 31 par une conduite 37 sur laquelle est disposée une vanne d'arrêt manuelle 37a, assure l'alimentation en azote d'un collecteur 35 (ou 35') auquel sont reliées, par des flexibles 38, les conduits 27 d'alimentation des huit buses 28 de décolmatage d'une unité de filtration. Les buses de décolmatage 28 des filtres des deux unités de filtration sont alimentées en azote à partir de deux électrovannes 36 et 36' associées chacune à une unité de filtration, qui peuvent être commandées successivement pour leur ouverture et la fourniture d'azote à chacun des collecteurs 35 et 35', successivement.

Sur la figure 9, on a représenté des moyens de distribution d'azote suivant une seconde variante de réalisation qui comportent, pour chacune des_deux unités de filtration, deux électrovannes 36a et 36b (ou 36'a et 36'b) reliées chacune à un collecteur 35a et 35b (ou 35'a et 35'b) auquel sont reliées, par des flexibles, les conduits 27 de quatre buses 28 de quatre filtres d'une unité de filtration. L'ensemble de distribution comporte donc quatre électrovannes qui peuvent être commandées successivement, de manière automatique, pour assurer le décolmatage successif des filtres 10, par ensemble de quatre filtres d'une unité de filtration.

De manière plus générale, il est possible de concevoir des installations de distribution d'azote permettant de réaliser successivement le décolmatage d'ensembles de n filtres parmi les N filtres d'une unité de filtration d'un réacteur de production d'oxyfluorure d'uranium.

Il est à remarquer que, même lorsqu'on réalise le décolmatage simultané des huit cartouches 10 d'une unité de filtration ou de quatre cartouches ou plus généralement de n cartouches filtrantes, le décolmatage est réalisé de manière individuelle dans chacune des cartouches filtrantes, contrairement au décolmatage suivant l'art antérieur.

En outre, le décolmatage individuel de chacune des cartouches filtrantes est réalisé sans arrêter l'évacuation d'acide fluorhydrique par l'unité de filtration. En particulier, il n'est pas nécessaire d'utiliser un moyen d'aiguillage des gaz évacués tel qu'une vanne trois-voies. Pendant l'injection d'azote de décolmatage de très faible durée, cette injection assure un arrêt momentané très bref de l'évacuation des gaz dans les cartouches filtrantes, l'azote de décolmatage injecté créant une onde de choc.

L'évacuation des gaz reprend aussitôt après l'injection de gaz de décolmatage, à travers les venturi 30 constituant les sorties de gaz des cartouches filtrantes 10.

Dans tous les cas, le procédé suivant l'invention permet d'obtenir un décolmatage efficace et homogène sur chacun des filtres des unités de filtration par un procédé "on line", c'est-à-dire sans interrompre l'évacuation à l'extérieur du réacteur, de l'acide fluorhydrique en mélange avec de la vapeur d'eau et de l'azote de dilution et de l'hydrogène.

Dans le cas d'un décolmatage individuel successif, ou par huit, par quatre, ou n filtres d'une unité de filtration comportant N filtres, avec n<N, l'évacuation des gaz est réalisée de manière totalement continue, à travers les cartouches filtrantes dans lesquelles on ne réalise pas le décolmatage, pendant la très courte durée du décolmatage impulsionnel.

L'invention ne se limite pas aux modes de réalisation qui ont été décrits.

On peut utiliser des moyens d'injection de gaz neutre de décolmatage différents de ceux qui ont été décrits, pour obtenir un jet de gaz neutre de décolmatage à vitesse sonique ou légèrement supersonique produisant une onde de choc à l'intérieur du filtre assurant un très bon décolmatage par décollement des particules retenues par la paroi 12 des filtres.

A la place d'azote, on peut utiliser tout autre gaz neutre tel que l'argon, pour effectuer le décolmatage par jet impulsionnel à vitesse sonique.

On peut utiliser des moyens de distribution et d'aiguillage du gaz de décolmatage différents des moyens décrits.

L'invention s'applique à toute installation de production d'oxyde d'uranium comportant un réacteur de conversion d'hexafluorure d'uranium en oxyfluorure ayant une partie de sortie sur laquelle sont disposées des unités de filtration comportant chacune un ou plusieurs filtres en parallèle.

Le réacteur de conversion peut comporter un nombre quelconque d'unités de filtration comprenant elles-mêmes un nombre quelconque de filtres.

Dans le cas d'une installation comportant au moins une unité de filtration comprenant une pluralité de filtres disposés en parallèle, les moyens d'injection de gaz neutre de décolmatage comportent une buse d'injection placée dans l'alignement axial de chacun des filtres de la pluralité de filtres.

Au lieu d'électrovannes, on peut utiliser tout autre type de vannes à commande automatique pour distribuer le gaz de décolmatage dans les buses de décolmatage, individuellement ou de manière groupée.

Dans le cas d'installations industrielles existantes, on a pu augmenter sensiblement le débit horaire de l'installation de conversion de l'hexafluorure d'uranium, en utilisant un procédé de décolmatage suivant l'invention.

Dans le cas d'installations suivant l'art antérieur, le débit en hexafluorure devait être limité à un débit d'hexafluorure inférieur à 100 kg/h et généralement voisin de 75 kg/h. Dans le cas d'installations comportant un dispositif de décolmatage suivant l'invention, on a pu traiter un débit double, c'est-à-dire 150 kg/h.

**Revendications**

1. Procédé de décolmatage d'au moins un filtre d'une installation de production d'oxyde d'uranium à partir d'hexafluorure d'uranium, comportant un réacteur (2) dans lequel on injecte de l'hexafluorure gazeux $UF_6$ et de la vapeur d'eau, on forme de l'oxyfluorure d'uranium $UO_2F_2$ à l'état pulvérulent et de l'acide fluorhydrique HF gazeux, on sépare l'oxyfluorure d'uranium $UO_2F_2$ entraîné par des gaz contenant de l'acide fluorhydrique HF gazeux, dans une partie de sortie du réacteur (2), dans au moins une unité de filtration (8) comportant au moins un filtre (10) ayant une paroi de filtration (12) de forme tubulaire disposée avec son axe (10') vertical et on évacue un gaz contenant l'acide fluorhydrique, à l'extérieur du réacteur(2), le décolmatage du filtre consistant à séparer de la paroi (12) du filtre, des particules d'oxyfluorure d'uranium $UO_2F_2$ déposées sur la paroi (12), par un courant de gaz neutre tel que l'azote, injecté dans le filtre (10) à contre-courant de la circulation du gaz évacué contenant l'acide fluorhydrique HF, **caractérisé par le fait qu'**on injecte le gaz neutre suivant l'axe (10') de la paroi du filtre (10) sous forme d'un jet à une vitesse supérieure à 300 m/s, pendant une durée inférieure à 1 seconde.

2. Procédé suivant la revendication 1, **caractérisé par le fait que** le jet de gaz neutre de décolmatage a une vitesse supérieure à 330 m/s.

3. Procédé suivant l'une quelconque des revendications 1 et 2, **caractérisé par le fait que** la durée d'injection de gaz neutre de décolmatage dans l'au moins un filtre (10) est comprise entre 0,1 et 0,5 seconde, le gaz neutre étant à une température voisine de 130°C et à une pression initiale comprise entre 2 et 10 bars et par exemple de 6 bars environ.

4. Procédé suivant l'une quelconque des revendications 1 à 3, **caractérisé par le fait qu'**on réalise des injections individuelles de gaz neutre de décolmatage, suivant leur axe (10'), à l'intérieur de chacun d'une pluralité de filtres (10) d'une unité de filtration (8).

5. Procédé suivant la revendication 4, dans le cas d'une installation de filtration comportant au moins une unité de filtration (8) comportant N filtres (10) disposés en parallèle, **caractérisé par le fait qu'**on réalise le décolmatage par groupes successifs de n filtres (avec n<N) de chacune des unités de filtration (8).

6. Procédé de décolmatage suivant la revendication 4, **caractérisé par le fait qu'**on réalise le décolmatage par injection de gaz neutre, successivement, dans chacun des filtres de chacune de l'au moins une unité de filtration (8) du réacteur (2).

7. Dispositif de décolmatage d'au moins un filtre (10) d'une installation (1) de production d'oxyde d'uranium à partir d'hexafluorure d'uranium, comportant un réacteur (2) comprenant une enveloppe ayant une disposition générale verticale, une conduite (5) d'injection d'hexafluorure d'uranium, de vapeur d'eau et d'un gaz de dilution pénétrant dans l'enveloppe du réacteur (2) ainsi qu'au moins une unité de filtration (8) de gaz évacués du réacteur (2) comportant un collecteur (11) relié à une conduite (7) d'évacuation des gaz à l'extérieur du réacteur (2) dans lequel débouche l'extrémité de sortie d'au moins un filtre (10) ayant une paroi tubulaire (12) d'axe vertical (10') supportée par une platine (9) séparant le collecteur de gaz (11) de l'espace intérieur de l'enveloppe du réacteur (2) dans laquelle est placé le filtre (10), le dispositif de décolmatage comportant un réservoir (20) de stockage de gaz neutre de décolmatage sous pression et des moyens de distribution et d'aiguillage de gaz neutre de décolmatage vers l'au moins un filtre (10) de l'au moins une unité de filtration (8) du réacteur (2), **caractérisé par le fait qu'**il comporte, dans l'alignement de l'axe (10') vertical de la paroi (12) du filtre (10), une buse (28) d'injection de gaz neutre reliée par une conduite d'alimentation (27) à au moins un élément de distribution (24, 36, 36', 36a, 36b, 36'a, 36'b) de gaz neutre de décolmatage.

**8.** Dispositif suivant la revendication 7, **caractérisé par le fait que** la buse (28) d'injection de gaz de décolmatage est disposée dans le collecteur (11) de l'unité de filtration (8), en vis-à-vis d'une extrémité de sortie du filtre (10) et qu'une bride (29) de support et de fixation du filtre (10) reposant sur la platine (9) du collecteur (11) est traversée par une ouverture (30) coaxiale à la buse (28) et constituant un venturi d'accélération du gaz de décolmatage injecté dans le filtre (10) suivant la direction axiale (10') par la buse (28).

**9.** Dispositif suivant la revendication 7, **caractérisé par le fait que** la buse (28) est disposée à l'intérieur et au voisinage de la partie médiane de la partie tubulaire (12) du filtre (10).

**10.** Dispositif suivant l'une quelconque des revendications 7 à 9, **caractérisé par le fait que** la buse (28) présente la forme d'un conduit convergent-divergent.

**11.** Dispositif suivant l'une quelconque des revendications 7 et 10, dans le cas d'une installation comportant au moins une unité de filtration (8) comprenant une pluralité de filtres (10) disposés en parallèle, **caractérisé par le fait que** des moyens d'injection de gaz de décolmatage comportant une buse d'injection (28) placée dans l'alignement axial (10') de l'enveloppe (12) d'un filtre (10) sont associés à chacun des filtres (10) de l'au moins une unité de filtration (8).

**12.** Dispositif suivant la revendication 11, **caractérisé par le fait que** chacune des buses (28) d'un moyen de décolmatage d'un filtre (10) est reliée par une conduite d'alimentation (27, 32) à un moyen de distribution individuel de gaz neutre de décolmatage constitué par une vanne individuelle (24) à commande automatique.

**13.** Dispositif suivant la revendication 11, **caractérisé**

**par le fait que** chacune des buses (28) de chacun des moyens d'injection de gaz de décolmatage dans un filtre (10) est reliée par une conduite (27) à des moyens de distribution (36, 36', 36a, 36b, 36'a, 36'b) assurant l'alimentation simultanée de n buses (28) parmi N buses d'une unité de filtration (8).

**Patentansprüche**

**1.** Verfahren zur Reinigung wenigstens eines Filters einer Anlage zur Produktion von Uranoxid aus Uranhexafluorid, die einen Reaktor (2) umfasst, in den man gasförmiges Hexafluorid $UF_6$ und Wasserdampf einbläst, man Uranoxyfluorid $UO_2F_2$ im feinpulverigen Zustand und gasförmige Flusssäure HF bildet, man das Uranoxyfluorid $UO_2F_2$, mitgeführt von gasförmige Flusssäure HF enthaltenden Gasen, in einem Ausgangsteil des Reaktors (2) abscheidet in wenigstens einer Filtrationseinheit (8) mit mindestens einem Filter (10), eine rohrförmige Filtrationswand (12) mit vertikaler Achse (10') umfassend, und man ein Flusssäure enthaltendes Gas aus dem Reaktor (2) evakuiert, wobei die Reinigung des Filters darin besteht, von der Wand (12) des Filters Partikel des Uranoxyfluorids $UO_2F_2$, die sich auf der Wand (12) niedergeschlagen haben, loszulösen, indem man in den Filter (10) einen Strom eines neutralen Gases wie Stickstoff einbläst, als Gegenstrom zu dem die Flusssäure HF enthaltenden evakuierten Gas,
**dadurch gekennzeichnet, dass** man das neutrale Gas entsprechend der Achse (10') der Wand des Filters (10) in Form eines Strahls mit einer Geschwindigkeit von mehr als 300 m/s einbläst, während einer Dauer von weniger als 1 Sekunde.

**2.** Verfahren nach Anspruch 1, **dadurch gekennzeichnet, dass** der Reinigungsstrahl aus neutralem Gas eine Geschwindigkeit von mehr als 330 m/s hat.

**3.** Verfahren nach einem der Ansprüche 1 und 2, **dadurch gekennzeichnet, dass** die Einblasdauer des neutralen Reinigungsgases in wenigstens einen Filter (10) zwischen 0,1 und 0,5 Sekunden enthalten ist, wobei die Temperatur des neutralen Gases ungefähr 130 °C beträgt und der Anfangsdruck zwischen 2 und 10 Bar enthalten ist und zum Beispiel ungefähr 6 Bar beträgt.

**4.** Verfahren nach einem der Ansprüche 1 bis 3, **dadurch gekennzeichnet, dass** man das neutrale Reinigungsgases individuell ins Innern jedes einzelnen einer Vielzahl von Filtern (10) einer Filtrationseinheit (8) entsprechend ihrer Achse (10') einbläst.

**5.** Verfahren nach Anspruch 4 im Falle einer Filtrationsanlage mit wenigstens einer Filtrationseinheit (8) mit N parallel angeordneten Filtern (10), **dadurch gekennzeichnet, dass** man aufeinanderfolgende Gruppen von n Filtern (mit n<N) von jeder der Filtrationseinheiten (8) reinigt.

**6.** Reinigungsverfahren nach Anspruch 4, **dadurch gekennzeichnet, dass** man die Reinigung realisiert, indem man sukzessive in jeden der Filter von jeder der - mindestens einen -Filtrationseinheiten (8) des Reaktors (2) neutrales Gas einbläst.

**7.** Vorrichtung zur Reinigung wenigstens eines Filters (10) einer Anlage (1) zur Produktion von Uranoxid aus Uranhexafluorid, umfassend einen Reaktor (2) mit einer im Wesentlichen vertikal angeordneten Hülle, eine in die Hülle des Reaktors (2) eindringende Leitung (5) zum Einblasen von Uranhexafluorid, Wasserdampf und eines Verdünnungsgas, sowie wenigstens eine Filtrationseinheit (8) des aus dem Reaktor (2) evakuierten Gases mit einem Sammler (11), der verbunden ist mit einer Leitung (7) zur Evakuation des Gases aus dem Reaktor (2) und in den das Ausgangsende von wenigstens einem Filter (10) mündet, eine rohrförmige Wand (12) mit vertikaler Achse (10') umfassend, getragen von einer Platte (9), die den Gassammler (11) von dem Innenraum der Hülle des Reaktors (2) trennt, in dem der Filter (10) angeordnet ist, wobei die Reinigungsvorrichtung einen Behälter (20) zur Speicherung des neutralen Reinigungsgases unter Druck und Verteilungs- und Verzweigungseinrichtungen des neutralen Reinigungsgases in Richtung wenigstens eines Filters (10) von mindestens einer Filtrationseinheit (8) des Reaktors (2) umfasst,
**dadurch gekennzeichnet, dass** sie in der Flucht der vertikalen Achse (10') der Wand (12) des Filters (10) eine Blasdüse (28) des neutralen Gases umfasst, die durch eine Versorgungsleitung (27) mit wenigstens einem Verteilungselement (24, 36, 36', 36a, 36b, 36'a, 36'b) des neutralen Reinigungsgases verbunden ist.

**8.** Vorrichtung nach Anspruch 7, **dadurch gekennzeichnet, dass** die Einblasdüse (28) des Reinigungsgases in dem Sammler (11) der Filtrationseinheit (8) einem Ausgangsende des Filters (10) gegenüber angeordnet ist und dass ein Trag- und Befestigungsflansch (29) des Filters (10), der auf der Platte (9) des Sammlers (11) ruht, von einer Öffnung (30) durchquert wird, die koaxial zu der Düse (28) ist und ein Venturirohr zur Beschleunigung des Reinigungsgases bildet, das in axialer Richtung (10') durch die Düse (28) eingeblasen wird.

**9.** Vorrichtung nach Anspruch 7, **dadurch gekennzeichnet, dass** die Düse (28) im Innern des rohrförmigen Teils (12) des Filters (10) und in der Nähe seiner Mitte angeordnet ist.

**10.** Vorrichtung nach einem der Ansprüche 7 bis 9, **dadurch gekennzeichnet, dass** die Düse (28) die Form einer konvergierenden-divergierenden Leitung aufweist.

**11.** Vorrichtung nach einem der Ansprüche 7 und 10 im Falle einer Anlage mit wenigstens einer eine Vielzahl parallel angeordneter Filter (10) umfassenden Filtrationseinheit (8), **dadurch gekennzeichnet, dass** Reinigungsgas-Einblaseinrichtungen, eine in der Flucht der Achse (10') der Hülle (12) eines Filters (10) angeordnete Einblasdüse (28) umfassend, jedem der Filter (10) von wenigstens einer Filtrationseinheit (8) zugeordnet sind.

**12.** Vorrichtung nach Anspruch 11, **dadurch gekennzeichnet, dass** jede der Düsen (28) einer Reinigungseinrichtung eines Filters (10) durch eine Versorgungsleitung (27, 32) mit einer individuellen Versorgungseinrichtung für neutrales Reinigungsgas verbunden ist, gebildet durch ein individuelles Ventil (24) mit automatischer Steuerung.

**13.** Vorrichtung nach Anspruch 11, **dadurch gekennzeichnet, dass** jede der Düsen (28) von jeder der Einrichtungen zum Einblasen von Reinigungsgas in einen Filter (10) mit einer Versorgungsleitung (27) mit Verteilungseinrichtungen (36, 36', 36a, 36b, 36'a, 36'b) verbunden ist, welche die simultane Versorgung von n Düsen (28) unter N Düsen einer Filtrationseinheit (8) sicherstellen.

**Claims**

**1.** Method of declogging at least one filter of a plant for producing uranium oxide from uranium hexafluoride, comprising a reactor (2) in which gaseous hexafluoride $UF_6$ and steam are injected, uranium oxyfluoride $UO_2F_2$ in powder form and gaseous hydrofluoric acid HF are formed, uranium oxyfluoride $UO_2F_2$ conveyed by gases containing gaseous hydrofluoric acid HF is separated, in an outlet part of the reactor (2), in at least one filtration unit (8) comprising at least one filter (10) having a tubular filtration wall (12) arranged with its axis (10') vertical, and a gas containing hydrofluoric acid is evacuated to the outside of the reactor (2), the declogging of the filter consisting in separating, from the wall (12) of the filter, uranium oxyfluoride $UO_2F_2$ particles deposited on the wall (12) by a stream of inert gas such as nitrogen, injected into the filter (10) counter-currentwise to the flow of evacuated gas containing the hydrofluoric acid HF, **characterized in that** inert gas is injected along the axis (10') of the wall of the filter (10) in the form of a jet with a velocity greater than 300 m/s for a duration of less than 1 second.

**2.** Method according to Claim 1, **characterized in that** the inert declogging gas jet has a velocity greater than 330 m/s.

**3.** Method according to either of Claims 1 and 2, **characterized in that** the duration of injecting inert declogging gas into at least one filter (10) is between 0.1 and 0.5 seconds, the inert gas being at a temperature close to 130°C and at an initial pressure of between 2 and 10 bar and, for example, of about 6 bar.

**4.** Method according to any one of Claims 1 to 3, **characterized in that** individual injections of inert declogging gas are carried out, along their axis (10'), inside each of a plurality of filters (10) of a filtration unit (8).

**5.** Method according to Claim 4, for a filtration plant comprising at least one filtration unit (8) comprising N filters (10) arranged in parallel, **characterized in that** declogging is carried out in successive groups of n filters (where n < N) of each of the filtration units (8).

**6.** Declogging method according to Claim 4, **characterized in that** declogging is carried out by injecting an inert gas successively into each of the filters of each of at least one filtration unit (8) of the reactor (2).

**7.** Device for declogging at least one filter (10) of a plant (1) for producing uranium oxide from uranium hexafluoride, comprising a reactor (2) including a jacket having a generally vertical arrangement, a pipe (5) for injecting uranium hexafluoride, steam and a dilution gas entering the jacket of the reactor (2) together with at least one unit (8) for filtering gases evacuated from the reactor (2) comprising a manifold (11) connected to a pipe (7) for evacuating gases to outside the reactor (2) in which emerges the outlet end of at least one filter (10) having a tubular wall (12) with a vertical axis (10') supported by a plate (9) separating the gas manifold (11) from the inner space of the jacket of the reactor (2) in which the filter (10) is placed, the declogging device comprising a reservoir (20) for storing pressurised inert declogging gas and means for distributing and routing inert declogging gas toward the at least one filter (10) of the at least one filtration unit (8) of the reactor (2), **characterized in that** it comprises, aligned with the vertical axis (10') of the wall (12) of the filter (10), a nozzle (28) for injecting inert gas, the nozzle connected by a pipe (27) for feeding inert declogging gas to at least one distribution element (24, 36, 36', 36a, 36b, 36'a, 36'b).

**8.** Device according to Claim 7, **characterized in that** the nozzle (28) for injecting declogging gas is arranged in the manifold (11) of the filtration unit (8), opposite an outlet end of the filter (10) and that a flange (29) for supporting and fastening the filter (10) resting on the plate (9) of the manifold (11) has a through-opening (30) coaxial with the nozzle (28) and constituting a venturi for accelerating the declogging gas injected into the filter (11) along the axial direction (10') via the nozzle (28).

**9.** Device according to Claim 7, **characterized in that** the nozzle (28) is arranged inside and close to the central part of the tubular part (12) of the filter (10).

**10.** Device according to any one of Claims 7 to 9, **characterized in that** the nozzle (28) has the shape of a convergent-divergent pipe.

**11.** Device according to either of Claims 7 and 10, for a plant comprising at least one filtration unit (8) having a plurality of filters (10) arranged in parallel, **characterized in that** the declogging gas injection means comprising an injection nozzle (28) placed in axial alignment (10') with the jacket (12) of a filter (10) are associated with each of the filters (10) of the at least one filtration unit (8).

**12.** Device according to Claim 11, **characterized in that** each of the nozzles (28) of a means for declogging a filter (10) is connected via a feed pipe (27, 32) to an individual means of distributing inert declogging gas consisting of an individual automatic control valve (24).

**13.** Device according to Claim 11, **characterized in that** each of the nozzles (28) of each of the means of injecting declogging gas into a filter (10) is connected via a pipe (27) to distribution means (36, 36', 36a, 36b, 36'a, 36'b) ensuring the simultaneous feeding of n nozzles (28) out of N nozzles of a filtration unit (8).

FIG.1

FIG.2

FIG.3

EP 1 341 593 B1

FIG.4

15

FIG.5

FIG.6

FIG.7

FIG.8

FIG.9

18